# EUROPEAN PATENT APPLICATION

(11) **EP 4 715 575 A1**
(43) Date of publication of application: **25.03.2026**
(21) Application number: 25204071.2
(22) Date of filing: 23.09.2025
(51) Int. Cl.: G06F 8/38, G06F 8/34, G06F 8/65, G06F 8/36, G06F 9/451, G06F 9/445

(54) **MODIFYING CODE-DEFINED VISUAL ASSETS IN COMPUTING SYSTEMS**

(30) Priority: 23.09.2024 US 202463697957 P; 07.03.2025 US 202519073926
(71) Applicant: Figma, Inc., San Francisco, CA 94102 (US)
(72) Inventor: KERN, Alexander Simon, San Francisco, 94102 (US); BURKE, Darragh John, San Francisco, 94102 (US); GIANNATTASIO, Thomas Joseph, San Francisco, 94102 (US); KLEIN, Nikolas, San Francisco, 94102 (US)
(74) Representative: Morrall, Jonathan Ian McLachlan

(57) **Abstract**

Embodiments of the present disclosure provide techniques for generating visual content in a design environment. An example method includes generating, on a canvas in a design environment, a layer including a code-defined visual asset based on an external code asset. An input associated with a modification to apply to the code-defined visual asset in the layer is received. Based on the received input, the code-defined visual asset in the layer is modified, and the modified code-defined visual asset is rendered on the canvas.

## Description

### BACKGROUND

### Field of the Various Embodiments

Embodiments of the present disclosure relate generally to graphic design tools and, more specifically, to techniques for generating and modifying visual content in a graphic design tool.

### Description of the Related Art

Graphic design tools generally allow for the creation of visual assets in a design environment. These visual assets may be defined, for example, as vector assets defined in terms of mathematical relationships between different components or raster assets defined in terms of absolute pixel locations. In some cases, a visual asset may include one or more containers, defined in the vector space, in which raster assets (e.g., images) can be inserted. A visual asset may include any number of visual components, and a visual asset may be defined in terms of relative positioning or other spatial relationships between visual components in the visual asset.

In many workflows, the process of designing a visual asset may be decoupled from the process of generating code used to implement the visual asset in an executable environment outside of the design environment. Because of this decoupling, a visual asset may be designed in a design environment and coded in a coding environment. However, the design environment and the coding environment may not support the same features, and thus, the design created in the design environment may not be replicable in the coding environment. In other words, the design of the visual asset created in the design environment may serve as a guide for the creation of the visual asset in the coding environment, and the appearance of the visual asset created in the coding environment may not match the appearance of the visual asset in the design environment.

Additionally, while the processes of designing visual assets and generating code used to implement visual assets may be decoupled, the resulting code generated to implement a visual asset in an executable environment may be tightly coupled with the appearance of the visual asset. Because of this coupling between appearance and implementing code, implementing multiple instances of a visual asset may involve duplicating code in a codebase implementing a visual asset. Thus, to change each instance of a visual asset, the same code may be modified repeatedly.

As the foregoing illustrates, what is needed are more effective techniques for implementing visual content in executable code.

### SUMMARY

One embodiment of the present disclosure provides techniques for generating visual content in a design environment. An example method includes generating, on a canvas in a design environment, a layer including a code-defined visual asset based on an external code asset. An input associated with a modification to apply to the code-defined visual asset in the layer is received. Based on the received input, the code-defined visual asset in the layer is modified, and the modified code-defined visual asset is rendered on the canvas.

One embodiment of the present disclosure provides techniques for modifying code-defined visual assets in a design environment. An example method includes importing a code-defined visual asset into a canvas in a design environment for editing. A request to modify the imported code-defined visual asset is received, and a code file associated with the code-defined visual asset is modified based on the received request. The canvas is updated to reflect the modified code file based on how the code-defined visual asset is imported into the canvas.

One technical advantage of the disclosed techniques relative to the prior art is that the disclosed techniques allow for visual assets to be defined in code and modified visually or in code in a design environment. A visual asset may be defined as code in an external code asset (e.g., a code file) and imported as an instance of the visual asset in a layer of a canvas in a design environment. By importing the external code asset into a layer of a canvas to generate an instance of the visual asset, the instance of the visual asset may inherit *a priori* defined properties for the visual asset. While changes are made to the instance visual asset in the layer of the canvas, the code associated with the instance of the visual asset may be modified, allowing for local modification of the instance of the visual asset without modifying the external code asset. Further, because designing and coding a visual asset may be more tightly coupled, embodiments presented herein may allow for the creation of visual assets in code that replicate the design of a visual asset instead of approximating a visual design created in a design space.

### BRIEF DESCRIPTION OF THE DRAWINGS

So that the manner in which the above recited features of the various embodiments can be understood in detail, a more particular description of the inventive concepts, briefly summarized above, may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
Figure 1 illustrates a computer system configured to implement one or more aspects of various embodiments of the present disclosure.
Figure 2 illustrates a design environment in which visual components are created and maintained as code-defined assets, according to some embodiments.
Figure 3 illustrates a design environment and links between visual components in the design environment and design files associated with the visual components, according to some embodiments.
Figures 4A and 4B are message flow diagrams illustrating messages exchanged between a code management engine and a graphic design engine for importing and modifying code-defined visual assets in a design environment, according to some embodiments.
Figure 5 is a flow diagram of method steps for modifying code-defined visual assets in a design environment based on an external code asset, according to some embodiments.
Figure 6 is a flow diagram of method steps for interacting with code-defined visual assets in a design environment, according to some embodiments.
Figure 7 illustrates a network computing system to implement an interactive graphic application platform, according to some embodiments.

### DETAILED DESCRIPTION

In the following description, numerous specific details are set forth to provide a more thorough understanding of the various embodiments. However, it will be apparent to one skilled in the art that the inventive concepts may be practiced without one or more of these specific details.

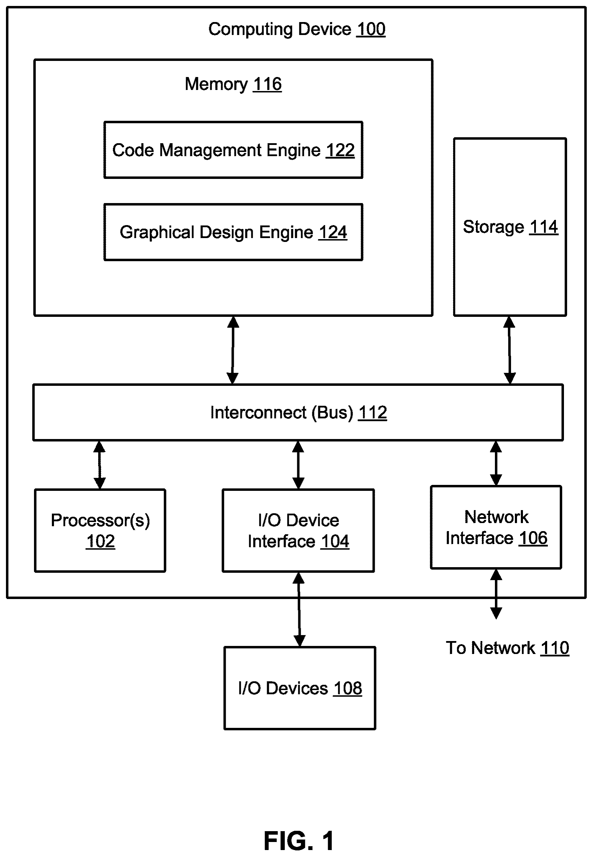

Figure 1 illustrates a computing device 100 configured to implement one or more aspects of various embodiments of the present invention. In one embodiment, computing device 100 includes a desktop computer, a laptop computer, a smart phone, a personal digital assistant (PDA), tablet computer, or any other type of computing device configured to receive input, process data, and optionally display images, and is suitable for practicing one or more embodiments. Computing device 100 is configured to run a code management engine 122 and a graphical design engine 124 that reside in a memory 116.

It is noted that the computing device described herein is illustrative and that any other technically feasible configurations fall within the scope of the present disclosure. For example, multiple instances of code management engine 122 or graphical design engine 124 could execute on a set of nodes in a distributed and/or cloud computing system to implement the functionality of computing device 100. In another example, code management engine 122 or graphical design engine 124 could execute on various sets of hardware, types of devices, or environments to adapt code management engine 122 or graphical design engine 124 to different use cases or applications. In a third example, code management engine 122 or graphical design engine 124 could execute on different computing devices and/or different sets of computing devices.

In one embodiment, computing device 100 includes, without limitation, an interconnect (bus) 112 that connects one or more processors 102, an input/output (I/O) device interface 104 coupled to one or more input/output (I/O) devices 108, memory 116, a storage 114, and a network interface 106. Processor(s) 102 may be any suitable processor implemented as a central processing unit (CPU), a graphics processing unit (GPU), an application-specific integrated circuit (ASIC), a field programmable gate array (FPGA), an artificial intelligence (AI) accelerator, any other type of processing unit, or a combination of different processing units, such as a CPU configured to operate in conjunction with a GPU. In general, processor(s) 102 may be any technically feasible hardware unit capable of processing data and/or executing software applications. Further, in the context of this disclosure, the computing elements shown in computing device 100 may correspond to a physical computing system (e.g., a system in a data center) or may be a virtual computing instance executing within a computing cloud.

I/O devices 108 include devices capable of providing input, such as a keyboard, a mouse, a touch-sensitive screen, a microphone, and so forth, as well as devices capable of providing output, such as a display device or speaker. Additionally, I/O devices 108 may include devices capable of both receiving input and providing output, such as a touchscreen, a universal serial bus (USB) port, and so forth. I/O devices 108 may be configured to receive various types of input from an end-user (e.g., a designer) of computing device 100, and to also provide various types of output to the end-user of computing device 100, such as displayed digital images or digital videos or text. In some embodiments, one or more of I/O devices 108 are configured to couple computing device 100 to a network 110.

Network 110 is any technically feasible type of communications network that allows data to be exchanged between computing device 100 and external entities or devices, such as a web server or another networked computing device. For example, network 110 may include a wide area network (WAN), a local area network (LAN), a wireless (Wi-Fi) network, and/or the Internet, among others.

Storage 114 includes non-volatile storage for applications and data, and may include fixed or removable disk drives, flash memory devices, and CD-ROM, DVD-ROM, Blu-Ray, HD-DVD, or other magnetic, optical, or solid-state storage devices. Code management engine 122 and graphical design engine 124 may be stored in storage 114 and loaded into memory 116 when executed.

Memory 116 includes a random-access memory (RAM) module, a flash memory unit, or any other type of memory unit or combination thereof. Processor(s) 102, I/O device interface 104, and network interface 106 are configured to read data from and write data to memory 116. Memory 116 includes various software programs that can be executed by processor(s) 102 and application data associated with said software programs, including code management engine 122 or graphical design engine 124.

### Example Code-Defined Visual Assets in a Design Environment

In graphical design software, such as that implemented by the graphical design engine 124 illustrated in Figure 1, visual assets, such as user interface components in a user interface under design in the graphical design engine 124, may be rendered and designed. A visual asset, as used herein, may be a group of visual components rendered in a user interface. Visual assets may be defined *a priori* (e.g., as code templates or pre-designed code-defined visual components in the graphical design engine 124) or may be designed by a user of the graphical design engine 124 and implemented in code.

To allow for a graphical interface to be designed using visual assets that are tightly coupled to the implementing code while allowing for these assets to be easily modifiable, embodiments described herein allow for visual assets to be defined, used, and re-used as code-defined assets. Generally, a visual asset including one or more visual components may be defined in an external code asset (e.g., a code file) that can be imported into a design environment. Generally, in importing a visual asset into the design environment, the visual asset can be imported into a layer on a canvas in the design environment. The layer on the canvas in the design environment may allow for spatial organization of various visual assets in the canvas and may allow for visual assets to be isolated from other visual assets and from the external code asset from which a visual asset is derived. Within a layer, various properties, actions, triggers, and the like may be modifiable to allow for customization of the appearance and/or functionality of an instance of a visual asset in the design without modifying the underlying external code asset from which the visual asset was generated. Further, an instance of a visual asset, and the code defining such a visual asset, may be exported to an external code asset for re-use in other designs. By doing so, embodiments described herein may allow for reusability of code associated with visual assets and rapid development of functional user interfaces based on code-defined visual assets. Further, because designing the visual appearance of a visual asset and implementing the functionality of the visual asset may be tightly coupled, embodiments presented herein may accelerate the process of building working user interfaces and may allow the design of such user interfaces to implement a desired visual appearance instead of merely approximating a desired visual appearance.

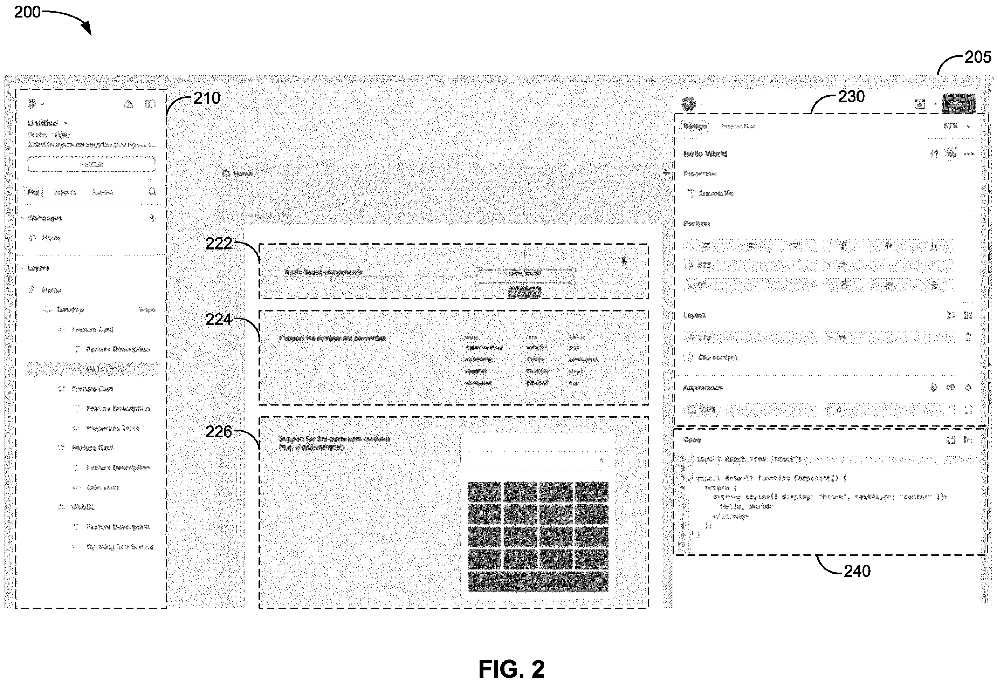

Figure 2 illustrates a design environment 200 in which visual components are created and maintained as code-defined assets, according to some embodiments. The design environment 200 may be rendered by one or both of code management engine 122 and/or graphical design engine 124 illustrated in Figure 1.

To allow for visual assets to be defined as code constructs and tightly couple the appearance of visual assets in a design environment 200 with the underlying implementing code, embodiments presented herein may allow for the creation of code implementing a visual asset and the use of these code-defined visual assets as modifiable objects within the design environment 200. As illustrated, the design environment 200 includes a layout panel 210 illustrating one or more layers associated with visual components in a design, a canvas 205 on which instances of code-defined visual assets are displayed, a control panel 230, and a code panel 240.

Visual assets 222, 224, and 226 (amongst others, not illustrated in Figure 2) generally represent instances of different code-defined visual assets. For example, the visual assets 222 and 224 illustrate various examples of visual assets for rendering non-interactive text in a graphical display. The visual asset 226, meanwhile, illustrates an example of an interactive visual asset (in this example, a calculator, though it should be recognized that the illustration of a calculator is but an example, and any type of interactive visual asset may be contemplated) in which interaction with buttons modifies the text displayed in a text field and/or triggers the execution of operations that modify the text displayed in the text field (e.g., triggers the execution of a mathematical operation, the result of which is displayed in the text field). Each of the visual assets 222, 224, and 226 may be contained in a code layer in the canvas 205 and listed in the layout panel 210 to allow for the modification of the properties and/or functionality of the visual assets independently.

Generally, an external code asset may define the appearance of a visual asset (e.g., one of the visual assets 222, 224, 226 illustrated in Figure 2) and/or the functionality of the visual asset. The appearance of the visual asset may be configured, for example, via code-defined properties (e.g., size, foreground and background color, transparency, rotation, border size and style, etc.) that can be modified by a user in the design environment. The functionality of the visual asset may be configured, for example, via triggers, actions, or the like. Generally, triggers may correspond to activity for which a code-defined visual asset emits an event notification that can be used by other code-defined visual assets to trigger execution of other code. Actions, meanwhile, may correspond to activity based on which code is executed (e.g., interaction with a button in a user interface causing code to be executed).

For example, the external code asset associated with the visual asset 222, which implements a static text block, may include code that, when executed, returns instructions for rendering the static text block in a graphical user interface. Because the visual asset 222 does not include interactivity features, the code associated with the visual asset, illustrated in code panel 240, may not include action handlers, triggers, or other code executed when a user interacts with the visual asset. The visual design properties associated with the visual asset may be modifiable via changes in various design parameters displayed in the control panel 230 and/or via direct manipulation of the visual asset on the canvas 205 (e.g., using in-canvas controls rendered on a visual asset). As illustrated, the parameters for a static text block may include position-related parameters (e.g., location, text orientation, element orientation, padding, etc.), size-related parameters, and the like. In some embodiments, the external code asset associated with the visual asset 222 may include *a priori* defined values for one or more parameters illustrated in the control panel 230. These parameters may be changed by a user in the design environment 200 by modifying the values of these parameters in the control panel 230 or modifying the appearance of the visual asset 222 on canvas 205. Similarly, the external code asset associated with the visual asset 224 may include code that returns instructions for rendering multiple static text blocks in a graphical user interface, each of which may have different properties.

The visual asset 226, which includes various interactivity properties, may be associated with an external code asset that defines both the appearance and functionality of the visual asset 226. The code defining the visual asset 226 may include code for rendering the visual asset 226 in a graphical user interface and code for performing various functions based on interaction with visual components in the visual asset 226. For example, the code may include code that emits triggers that result in modifying the text displayed in a text box or otherwise modify a state of the visual asset 226. The code defining the visual asset 226 may further include action handling code that causes specified operations to be performed within the graphical user interface. For example, action handling code may be attached to specific buttons to define an operation to be performed, to clear a buffer or other memory associated with the calculator, to execute a previously specified operation, or the like.

Generally, to create a code layer for an instance of a visual asset, an external code asset may be imported into a layer on the canvas 205. The external code asset may be imported directly from the external code asset or from an in-canvas container in which the external code asset has already been imported for use and modification within the canvas 205 (also referred to as a code instance). To do so, a code management engine 122 can maintain a collection of external code assets from which code layers can be generated. The collection of external code assets may generally include code-defined visual assets that have been designed and implemented in code in a design environment, implemented in code outside of a design environment, or the like. When an external code asset associated with a code-defined visual asset is imported into a layer on a canvas in the design environment, the code management engine 122 can copy the code into a container associated with canvas and rewrite the code to comply with various rules specific to a language in which the code assets are written. For example, for external code assets written in a programming language that supports static determination of exported code assets, the code management engine 122 can rewrite the code to change what is exported and what is kept private within the exported code, to comply with namespace rules defined by the programming language, or the like.

For example, where the language in which code assets are written to allow for the definition of a single default export (or public code export pointer) component (e.g., a named component that can be referenced by any name in code in which the component is imported) within a layer on the canvas 205 in the design environment 200. When the code associated with a code instance includes a default export and the default export component is exported to the layer on the canvas 205, the code may be copied from the code instance to the layer on the canvas 205. In another example, when the code associated with the code-defined visual asset does not include a default export (public code export pointer) component, static analysis and a code compiler can be used to identify the function associated with the code-defined visual asset to be designated as the default export (public code export pointer) component. For example, a semantic match between the name of the code instance (or external code asset), as imported into the design environment 200, and the name of the visual component being converted from a code instance to a code layer in the canvas can be used to identify the function defined as the default export (public code export pointer) component within the layer. In still another example, where the code associated with the code instance includes a default export (public code export pointer) component that is different from the component being converted from a code instance to a code layer in the canvas, the code management engine 122 can rewrite the code to change the default export (public code export pointer) component from that designated in the external code asset to the component being converted to the code layer in the canvas.

In some embodiments, the source code associated with a code-defined visual asset in a code instance may be analyzed for errors prior to conversion from a code instance to a code layer in the canvas. To do so, the source code may be compiled to determine whether errors exist when compiling the code. Generally, errors may exist when code does not conform to syntactic rules defined for a language in which the code-defined visual asset is written. If syntax errors exist in the source code associated with the code-defined visual asset, then the code management engine 122 can copy the source code to the code layer on the canvas without modifying the source code. It should be noted that analysis of the source code to ensure syntactic correctness may allow for source code that is valid according to the syntax rules for a language to be modified during the conversion from a code instance to a code component. However, code that is valid syntactically may not produce a desired result when executed, and the modification of source code performed by the code management engine 122 when converting a visual asset from a code instance to a code layer may allow functionally incorrect code to be imported into a code layer.

Visual assets 222, 224, 226, which represent instances of code-defined visual assets rendered on layers in the canvas 205, can be modified in the design environment 200 in a variety of manners. Visual assets may be imported as a code instance in the design environment or as a code layer in the design environment. Modifications to a code instance may be global modifications that modify the appearance and/or functionality of all instances of the visual asset in the design environment 200. That is, if a code-defined visual asset is imported as a code instance and one or more instances of the code-defined visual asset are generated in code layers (e.g., via conversion from a code instance, as discussed above), a modification to the external code asset associated with the code-defined visual asset may be propagated to the instances of the code-defined visual asset in code layers in the canvas 205. Modifications made to a code-defined visual asset in a layer on the canvas 205, meanwhile, may be localized to the specific layer in which a modification is performed.

Modifications to a code-defined visual asset may be performed based on changes to parameters in the control panel 230, based on changes to code in the code panel 240, and/or via controls associated with a visual asset and displayed on the canvas 205. When a code-defined visual asset is selected in the canvas 205, the control panel 230 may be populated with one or more controls for modifying the visual appearance of the code-defined visual asset. The code panel 240, meanwhile, may be populated with the code defining the code-defined visual asset. When a modification is made to the properties of the code-defined visual asset in the control panel 230 or via changes to code defining the code-defined visual asset in the code panel 240, the appearance of the code-defined visual asset may be updated in the canvas 205. In some embodiments, when the visual appearance of a code-defined visual asset changes, a previously-generated static image (or snapshot) of the code-defined visual asset may be replaced with an updated static image of the updated code-defined visual asset. In some embodiments, the code associated with the code-defined visual asset may be superimposed on the canvas 205 and updated with code reflecting the updated code-defined visual asset when the visual appearance of the code-defined visual asset changes.

A code-defined visual asset in a layer on the canvas 205 may be converted and exported to an external code asset (code instance). To export a code-defined visual asset from a layer in the canvas 205 to an external code asset, the code management engine 122 can generate a new code file in a file system (e.g., the file system of the computing device on which the design environment 200 is operating, a virtual file system provided by the design environment 200, etc.). Code from the layer in the canvas 205 may be copied to the new code file. In some embodiments, converting the code-defined visual asset from a code layer to a code instance may include converting the layer to a code instance node that allows for the code-defined visual asset to continue to be modified inside the design environment 200. As discussed, instances of the code-defined visual asset copied to layers in the canvas 205 may be linked to the code instance node, and changes to the visual asset at the code instance node may propagate to the layers in the canvas 205 containing instances of the visual asset.

Generally, layers in the canvas 205, and the corresponding code-defined visual assets, may be duplicated within the design environment 200. When a layer is duplicated, the design environment creates a new layer (and code containers associated therewith) and copies the contents of the source layer to the new layer. In copying the contents of the source layer to the new layer, the code associated with code-defined visual assets in a source layer may be copied to a code container associated with the new layer, and snapshots associated with the code-defined visual assets in the source layer may be copied to the new layer and displayed in the design environment 200. By allowing for the duplication of layers in the design environment 200, the design environment 200 allows for code-defined visual assets to be duplicated within the design environment 200 for iterative changes, branching, and other experimentation. Further, because each layer in which a code-defined visual asset is associated with the external code asset, changes to the external code asset may be propagated to the code-defined visual asset in each layer containing that asset in the canvas 205.

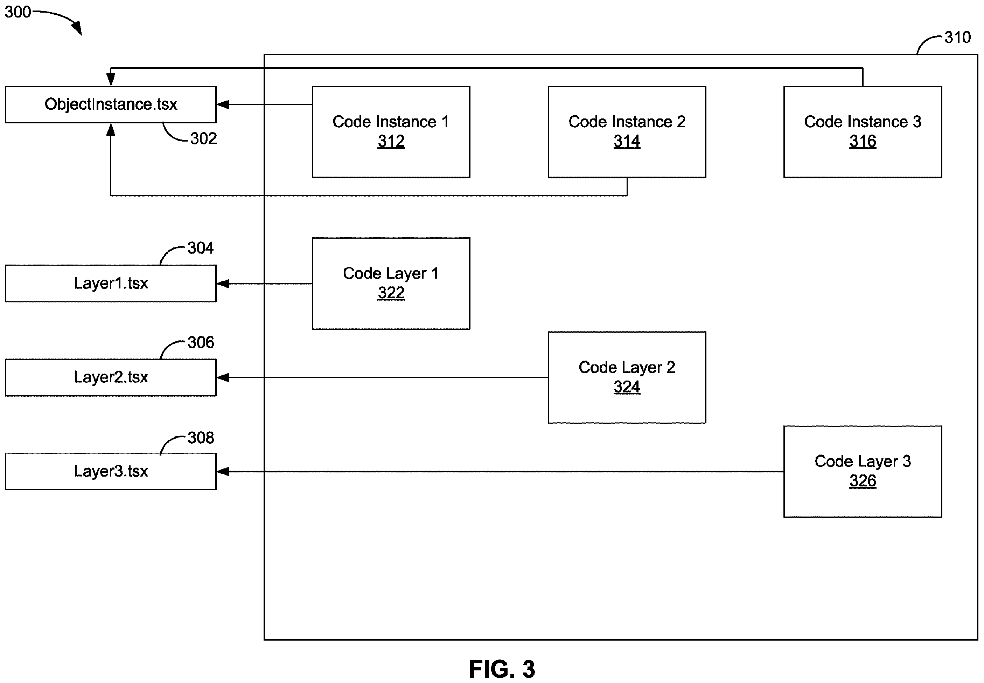

Figure 3 illustrates an example 300 of a design environment and links between visual components in the design environment and design files associated with the visual components, according to some embodiments.

As in Figure 2, a design environment may include a canvas 310 on which various code-defined visual assets may be imported and edited. The design environment allows for the importing and editing of these code-defined visual assets as instances, represented by object instances 312, 314, and 316 (amongst others not illustrated in Figure 3) or by layers 322, 324, and 326 (amongst others not illustrated in Figure 3).

Code instances 312, 314, and 316 are associated with a same external code asset (e.g., in this example, the code asset 302 named Objectlnstance.tsx). When a new code instance is added to the canvas 310 (e.g., by duplicating one of code instances 312, 314, or 316), the new code instance may also be associated with the code asset 302. Edits made to one of the code instances 312, 314, or 316 in the design environment may be propagated to the code asset 302. Because the code instances 312, 314, and 316 are references to the code asset 302, modifications to the code asset 302 are generally reflected on the canvas 310 in each of the code instances that are associated with the code asset 302.

In some embodiments, one or more of code instances 312, 314, and/or 316 can be forked from the other code instances imported into the canvas 310. To do so, a new code asset may be created, for example, as a duplicate of the code asset 302. The new code asset may be attached or otherwise associated with a code instance 312, 314, or 316 being forked from the code instances associated with the code asset 302. In such a manner, the code instances associated with the code asset 302 may be edited and maintained separately from the code instances associated with the new code asset. An edit to a code instance associated with the code asset 302 may be propagated to the other code instances associated with the code asset 302 but may not be propagated to the code instances associated with the new code asset. Meanwhile, an edit to a code instance associated with the new code asset may not be propagated to the code instances associated with the code asset 302.

In contrast, code layers 322, 324, and 326 (amongst others not illustrated in Figure 3) allow for modifications to code-defined visual assets in a code layer to be isolated to that layer. As illustrated, each code layer 322, 324, 326 may be associated with a corresponding code asset 304, 306, 308, respectively. Because each code layer 322, 324, 326 may be a self-contained space in which the design and/or functionality of a code-defined visual asset may be modified, code layers 322, 324, 326 may be used to iterate on a design on the canvas 310 without modifying the content or the underlying code associated with visual assets included in a code layer 322, 324, 326. That is, a modification to a code-defined visual asset in code layer may be propagated to the corresponding code asset 304, but may not be propagated to versions of the code-defined visual asset in code layers 324 and 326. Further, when a new code layer is created, a new corresponding code file may also be created to enforce the isolation of code layers and the visual assets contained therein from other code layers on the canvas 310.

In some embodiments, each code layer 322, 324, 326 (amongst others not illustrated in Figure 3) may be associated with a layer-specific modification history and information describing the various objects contained therein. Within a code layer 322, 324, 326, modifications can be made to the code-defined visual assets that are part of the code layer using various techniques. For example, design changes may be made directly to visual assets within the design environment (e.g., by interacting with various design tools that interact with and change objects loaded in the design environment). Design and/or functional changes may be made to assets within the design environment by modifying the source code associated with these assets (e.g., by modifying the code file associated with the layer in which visual assets or components therein are being modified). These modifications may be performed manually (e.g., via a code editor in the design environment) or using various automated code generation techniques that ingest input prompts describing the functionality of a code-defined visual asset and generate the corresponding code to implement such functionality.

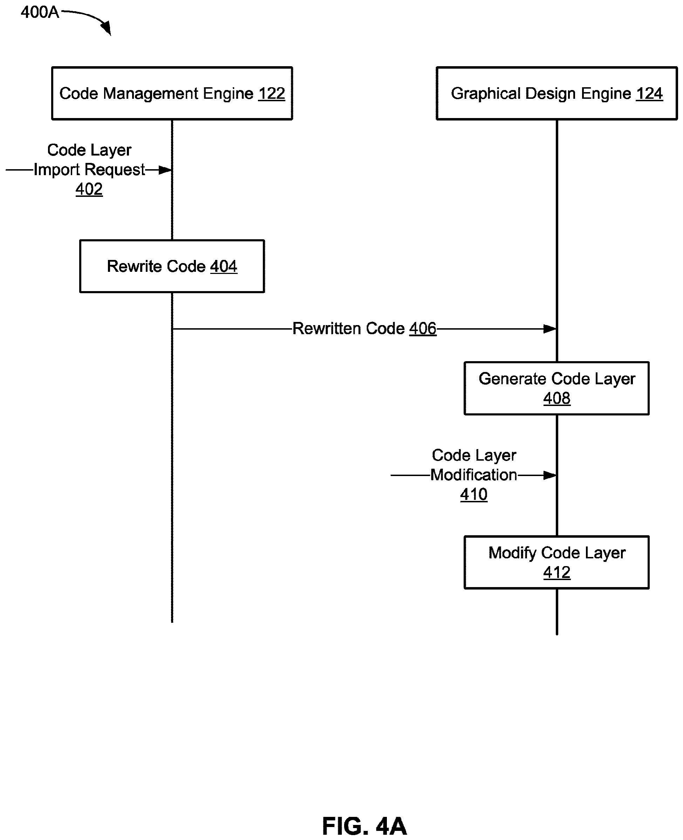

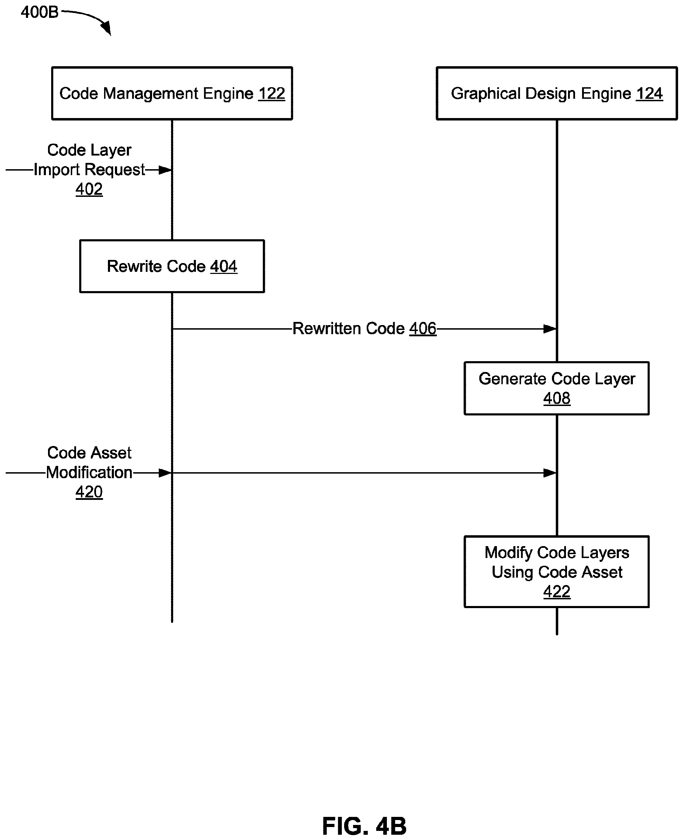

Figures 4A and 4B are message flow diagrams illustrating messages exchanged between a code management engine and a graphical design engine for importing and modifying code-defined visual assets in a design environment, according to some embodiments.

Message flow diagram 400A illustrates messages exchanged between a code management engine 122 and a graphical design engine 124 to import an external code asset associated with a code-defined visual asset (e.g., a code instance) into a layer on a canvas in a design environment and modify the code-defined visual asset in the layer, according to some embodiments. As illustrated, to import an external code asset into a layer in the canvas, a code layer import request 402 may be received at code management engine 122. The code layer import request 402 generally identifies the external code asset from which an instance of the code-defined visual asset is to be created and a layer in the canvas into which the instance of the code-defined visual asset is to be inserted.

In response to the code layer import request 402, the code management engine 122 rewrites, at block 404, the source code from the external code asset to comply with various defined rules for code in the design environment. For example, as discussed above, the source code may be rewritten to comply with restrictions on the number of named default export components in a code file associated with a layer in the design environment, in the design environment itself, or the like. In some embodiments, the code may be rewritten if the source code from the external code asset compiles successfully. Generally, when the source code from the external code asset fails to compile (indicating that the source code fails to comply with syntactic rules defined for a language in which the external code asset is written), the code management engine 122 may omit code rewriting at block 404.

The rewritten code 406 may be provided to graphical design engine 124 to generate an instance of the code-defined visual asset in a layer of a canvas rendered by the graphical design engine 124. To do so, at block 408, a code layer is generated, and the rewritten code 406 may be copied to the code layer. Generally, the code layer, as discussed, represents a container in which code-defined visual assets can be contained and edited locally (e.g., in such a manner that edits to a code-defined visual asset within one layer of the canvas does not cause other instances of the code-defined visual asset in other layers on the canvas).

Subsequently, a modification 410 to the code layer may be received at the graphical design engine 124. As discussed, the modification may include changes to the visual properties of the code-defined visual asset (e.g., changes to the size of the code-defined visual asset or components contained therein, changes to the color of the code-defined visual asset or components contained therein, additions or removals of components in the visual asset, etc.), changes to the underlying code associated with the code-defined visual asset, or the like. Based on receiving the modification 410, the graphical design engine 124 modifies the code layer at block 412. As discussed, because the modification 410 is local to the code layer, the modification may affect the instance of the code-defined visual asset in the layer but may not affect other instances of the code-defined visual asset in the design environment.

Figure 4B illustrates messages exchanged between a code management engine 122 and a graphical design engine 124 to import an external code asset associated with a code-defined visual asset (e.g., a code instance) into a layer on a canvas in a design environment and modify the external code asset associated with the code-defined visual asset in the layer, according to some embodiments.

As illustrated, after the code layer is generated at block 408 from code 406 rewritten at block 404 in response to a code layer import request 402, an external code asset modification 420 may be received. While illustrated as a modification received at code management engine 122 in Figure 4B, it should be recognized that a modification may also be performed via changes to a special global instance of the code-defined visual asset rendered in a design environment executed by the graphical design engine 124. As discussed, the modification may include changes to the visual properties of the code-defined visual asset (e.g., changes to the size of the code-defined visual asset or components contained therein, changes to the color of the code-defined visual asset or components contained therein, additions or removals of components in the visual asset, etc.), changes to the underlying code associated with the code-defined visual asset, or the like. Based on receiving the modification 420, the graphical design engine 124 modifies, at block 422, code layers in which instances of the code-defined visual asset are imported. Because the modification is made to the underlying external code asset (or code instance), the modification may be a global modification that modifies instances of the code-defined visual asset included on a canvas rendered by the graphical design engine 124.

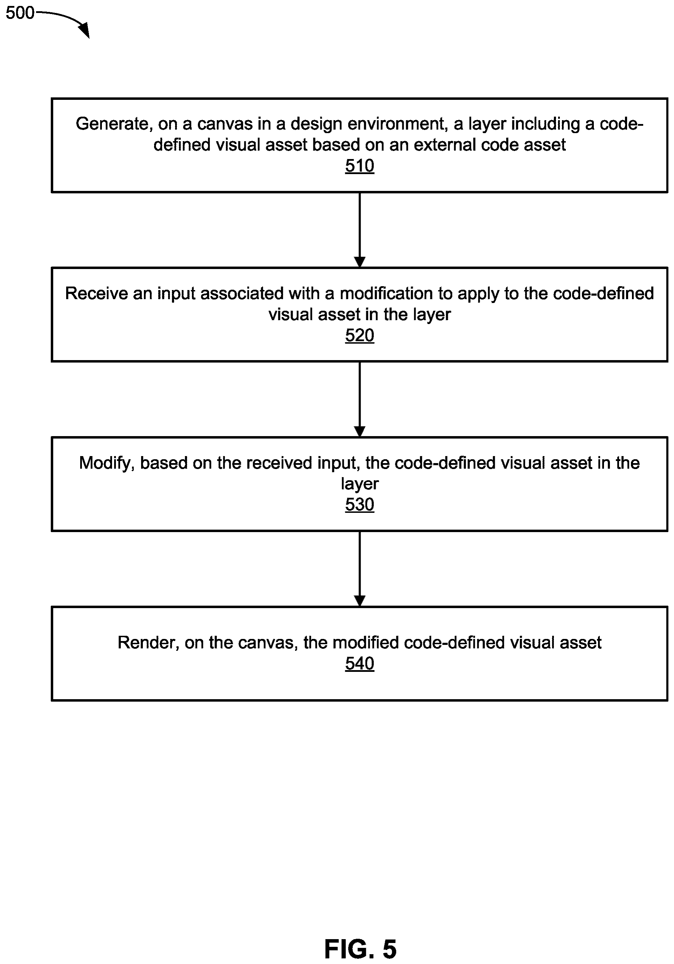

Figure 5 is a flow diagram illustrating example operations 500 for modifying code-defined visual assets in a design environment based on an external code asset, according to some embodiments. The operations 500 may be performed, for example, by a computing system including one or more processors, such as the processor(s) 102 of the computing device 100 illustrated in Figure 1.

As illustrated, the operations 500 begin at block 510, with generating, on a canvas in a design environment, a layer including a code-defined visual asset based on an external code asset. Generally, the layer in the design environment may serve as a container in which code defining a code-defined visual asset may be stored and as a container in which the positioning and layout of the code-defined visual asset may be modified in relation to other visual assets displayed in the design environment.

In some embodiments, to generate the layer including the code-defined visual asset, source code in the external code asset may be copied to source code associated with the layer in the canvas. The source code associated with the layer in the canvas may be modified based on an identity of the default export name in the source code and a name of the code-defined visual asset in the layer.

In some embodiments, modifying the source code associated with the layer in the canvas generally includes determining that the source code in the external code asset does not include a defined default export name. In such a case, the source code associated with the layer may be modified such that a function associated with the name of the code-defined visual asset is defined as a default export in the layer in the canvas. Modification of the source code such that a function associated with the name of the code-defined visual asset is defined as a default export in the layer in the canvas may be used to ensure that a graphical interface, such as the design environment, is provided a way by which the correct graphical assets are identified for rendering.

In some embodiments, the source code in the external code asset may export a single component. In such a case, the source code associated with the layer may be modified such that a function associated with the component is defined as a default export in the layer in the canvas.

In some embodiments, modifying the source code associated with the layer in the canvas may include determining that the source code in the external code asset includes a default export name different from exported code associated with the layer. In such a case, the source code associated with the layer in the canvas may be modified such that a defined default export name in the modified source code is associated with the exported code instead of the default export name in the external code asset.

In some embodiments, generating the layer including the code-defined visual asset may include determining whether to modify the source code associated with the code-defined visual asset. A determination of whether to modify the source code may be based on determining that the code-defined visual asset in the layer is generated using a default export identified in the external source code asset. In such a case, the source code in the external code asset may be copied to the layer on the canvas without modification. In some embodiments, a determination of whether to modify the source code may be based on determining that the source code for the code-defined visual asset complies and is syntactically correct. If the code fails compilation or otherwise is not syntactically correct, the source code for the code-defined visual asset may be copied directly to the layer without modification.

In some embodiments, generating the layer including the code-defined visual asset comprises inserting, into the layer in the canvas, a static image of the visual asset. The static image of the visual asset may be an image captured from the design environment when the code-defined visual asset was created. Generally, by using the static image of the visual asset to render the visual asset in the design environment, code associated with the visual asset may not need to execute, reducing the computational expense involved in rendering visual assets in the design environment.

At block 520, the operations 500 proceed with receiving an input associated with a modification to apply to the code-defined visual asset in the layer.

At block 530, the operations 500 proceed with modifying, based on the received input, the code-defined visual asset in the layer. In some embodiments, the code-defined visual asset in the layer may be modified without modifying the external code asset. Further, in some embodiments, the code-defined visual asset in the layer may be modified without modifying instances of the code-defined visual asset in other layers on the canvas in the design environment.

In some embodiments, the received input associated with the modification to apply to the code-defined visual asset in the layer comprises a change made in one or more control panels in the design environment to one or more properties associated with one or more visual components in the code-defined visual asset. Modifying the code-defined visual asset in the layer may include editing code defining the code-defined visual asset in the layer based on the received input.

In some embodiments, the received input associated with the modification to apply to the code-defined visual asset in the layer comprises a change to code associated with the code-defined visual asset.

At block 540, the operations 500 proceed with rendering, on the canvas, the modified code-defined visual asset.

In some embodiments, the operations 500 further include detecting a change performed in the external code asset from which the layer was generated. Instances of the code-defined visual asset may be modified based on the detected change. By doing so, a global change to the code-defined visual asset may be performed by propagating a modification to the external code asset to other instances of the code asset so that changes need not be manually repeated for each instance of the code-defined visual asset.

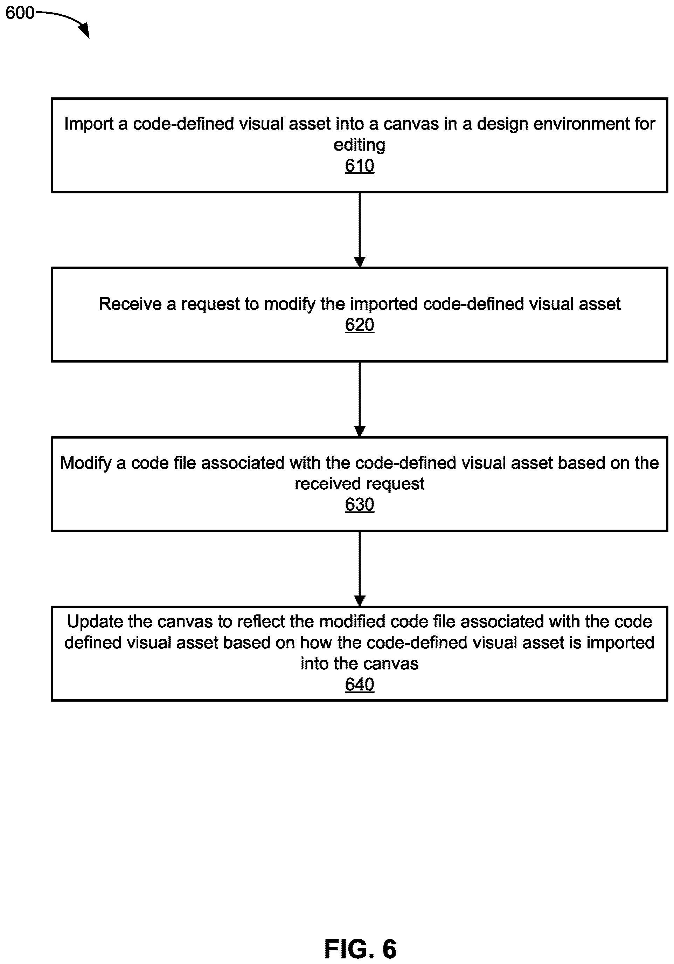

Figure 6 is a flow diagram illustrating example operations 600 for interacting with code-defined visual assets in a design environment, according to some embodiments. The operations 600 may be performed, for example, by a computing system including one or more processors, such as the processor(s) 102 of the computing device 100 illustrated in Figure 1.

As illustrated, operations 600 begin at block 610 with importing a code-defined visual asset into a canvas in a design environment for editing. As discussed, the code-defined visual asset may be imported into the canvas as an instance or a layer. Generally, a layer represents a self-contained space in the canvas in which modifications made to visual assets in the layer are isolated to that layer. Instances represent references to an underlying external code asset or code file, such that changes to the underlying external code asset or code file are rendered for each instance on the canvas that references the external code asset or code file.

At block 620, operations 600 proceed with receiving a request to modify the imported code-defined visual asset. As discussed, the request to modify the imported code-defined visual asset may include a change to the visual properties of the code-defined visual asset made on the canvas and/or in a control panel specifying the properties of the code-defined visual asset. In some embodiments, the request to modify the imported code-defined visual asset may also or alternatively include a change to the functionality of the code-defined visual asset made on the canvas and/or in a code panel in which the code associated with the code-defined visual asset is displayed for editing.

At block 630, operations 600 proceed with modifying a code file associated with the code-defined visual asset based on the received request.

At block 640, operations 600 proceed with updating the canvas to reflect the modified code file based on how the code-defined visual asset is imported into the canvas.

In some embodiments, the code-defined visual asset may be imported into a new layer on the canvas in the design environment. The new layer may, in some embodiments, be a duplicate of another layer on the canvas in the design environment. Because layers represent self-contained spaces on the canvas, each layer may be associated with its own code asset defining the code-defined visual assets in the layer.

In some embodiments, importing the code-defined visual asset into a new layer on the canvas may include creating the code file as a file associated with the new layer. Code associated with the code-defined visual asset may then be added to the created code file.

In some embodiments, when a modification is made to a code-defined visual asset in a new layer on the canvas in the design environment, the modification may be isolated from code files associated with other layers on the canvas in the design environment. The modification may also be isolated from an external code file associated with the imported code-defined visual asset.

In some embodiments, the code-defined visual asset may be imported as an instance on the canvas in the design environment. As discussed, the instance generally references (e.g., points to) an external code file associated with the code-defined visual asset. When a request to modify the code-defined visual asset is received (e.g., with respect to an instance rendered on the canvas), the underlying external code file associated with instances of the code-defined visual asset may be modified. Thus, when the canvas is updated to reflect the modification to the code file associated with the code-defined visual asset, each instance of the code-defined visual asset referencing the external code file may be re-rendered on the canvas in the design environment.

In some embodiments, a request to separate the instance from other instances referencing the external code file may be received. Responsive to the request, a new external code file may be generated from the external code file associated with the code-defined visual asset, and the instance may be associated with the new external code file. In some embodiments, when a request is received to modify the instance of the code-defined visual asset, the new code file may be modified based on the received request while leaving the code file associated with the code-defined visual asset unmodified, and the instance may be updated on the canvas to reflect the modified new code file.

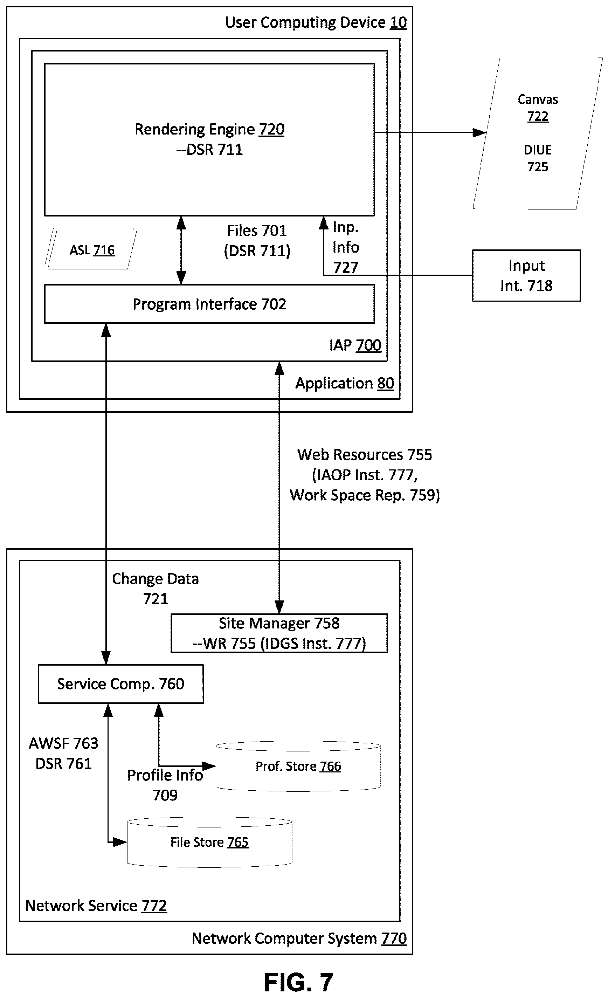

Figure 7 illustrates a network computing system to implement an interactive application platform on a user computing device, according to some embodiments. A network computing system such as illustrated in Figure 7 can be implemented using one or more servers which communicate with user computing devices over one or more networks. The network computer system 750 illustrated in Figure 5 may correspond, for example, to the computing device 100 illustrated in Figure 1 and can be used to generate and/or modify visual content based on generative artificial intelligence models and an input prompt specifying a design objective for the visual content.

In some embodiments, the network computing system 750 performs operations to enable an interactive application platform ("IAP 700") to be implemented on user computing devices 10. In some embodiments, the IAP 700 can be implemented by the user initiating a session (e.g., user accessing a website) to receive programmatic resources of the IAP 700. A browser component executes the programmatic resources to implement the IAP 700, with functionality to receive user input and to render content that is based on or responsive to user input. As described, the IAP 700 is implemented to enable the user to create various types of content, such as interactive graphic designs, art, whiteboard content, program code renderings, presentations, and/or textual content. As further described, the IAP 700 can include logic ("ASL 716") for implementing one or more application services, where each application service is implemented through the IAP 700 to provide a corresponding set of functionality and user experience. The IAP 700 also implements the application services to share some resources, such as the canvas, workspace file or library of design elements. Further, the IAP 700 enables multiple application services to be used during a given online session and/or with respect to a particular application service.

According to some embodiments, a user of computing device 10 operates web-based application 80 to access a network site, where programmatic resources are retrieved and executed to implement the IAP 700. The web-based application 80 can execute scripts, code and/or other logic (the "programmatic components") to implement functionality of the IAP 700. In some embodiments, the web-based application 80 can correspond to a commercially available browser, such as GOOGLE CHROME (developed by GOOGLE, INC.) or SAFARI (developed by APPLE, INC.). In some embodiments, the processes of the IAP 700 can be implemented as scripts and/or other embedded code which web-based application 80 downloads from a network site. For example, the web-based application 80 can execute code that is embedded within a webpage to implement processes of the IAP 700. The web-based application 80 can also execute the scripts to retrieve other scripts and programmatic resources (e.g., libraries) from the network site and/or other local or remote locations. By way of example, the web-based application 80 may execute JAVASCRIPT embedded in an HTML resource (e.g., web-page structured in accordance with HTML 5.0 or other versions, as provided under standards published by W3C or WHATWG consortiums). In some embodiments, the rendering engine 720 may utilize graphics processing unit (GPU) accelerated logic, such as provided through WebGL (Web Graphics Library) programs which execute Graphics Library Shader Language (GLSL) programs that execute on GPUs.

The IAP 700 can be implemented as part of a network service, where web-based application 80 communicates with one or more remote computers (e.g., server used for a network service) to execute processes of the IAP 700. The web-based application 80 retrieves some or all of the programmatic resources for implementing the IAP 700 from a network site. The web-based application 80 may also access various types of data sets in providing the IAP 700. The data sets can correspond to files and design libraries (e.g., predesigned design elements), which can be stored remotely (e.g., on a server, in association with an account) or locally. In some embodiments, the network computer system 750 provides a shared design library which the user computing device 10 can use with any of the application services provided through the IAP 700. In this way, the user may initiate a session to implement the IAP 700 for the purpose of creating or editing the workspace file, as rendered on the canvas 722, in accordance with one of multiple collaborative application services of the IAP 700.

In some embodiments, the IAP 700 includes a program interface 502, an input interface 718 and a rendering engine 720. The program interface 72 can include one or more processes which execute to access and retrieve programmatic resources from local and/or remote sources. In an implementation, the program interface 502 can generate, for example, a canvas 722, using programmatic resources which are associated with web-based application 80 (e.g., HTML 5.0 canvas). As an addition or variation, the program interface 502 can trigger or otherwise cause the canvas 722 to be generated using programmatic resources and data sets (e.g., canvas parameters) which are retrieved from local (e.g., memory) or remote sources (e.g., from network service).

The program interface 502 may also retrieve programmatic resources that include an application framework for use with canvas 722. The application framework can include data sets which define or configure, for example, a set of interactive graphic tools that integrate with the canvas 722 and which comprise the input interface 718, to enable the user to provide input to generate or update content rendered on the canvas 722.

According to some embodiments, the input interface 718 can be implemented as a functional layer that is integrated with the canvas 722 to detect and interpret user input. The input interface 718 can, for example, process a user's interaction with an input mechanism (e.g., pointer device, keyboard) of the user computing device, to detect, for example, cursor positioning/movement with respect to the canvas 722, hover input (e.g., pre-selection input), selection input (e.g., clicks or double clicks), shortcuts (e.g., key board inputs) and other inputs. In processing a user's interaction with a pointer device, the input interface 718 can use a reference of the canvas 722 to identify a screen location of a user's cursor as the user moves or otherwise interacts with the pointer device. Additionally, the input interface 718 can interpret an input action of the user based on the location of the detected input (e.g., whether the position of the input indicates selection of a tool, an object rendered on the canvas, or region of the canvas), the frequency of the detected input in a given time period (e.g., double-click), and/or the start and end position of an input or series of inputs (e.g., start and end position of a click and drag), as well as various other input types which the user can specify (e.g., right-click, screen-tap, etc.) through one or more input devices. In some embodiments, the input interface 718 can interpret, for example, a series of inputs as a design tool selection (e.g., shape selection based on location of input), as well as inputs to define attributes (e.g., dimensions) of a selected shape. In some embodiments, the input interface 718 can interpret a continuous input (corresponding to a continuous movement of the user's pointer device) as selecting a tool (e.g., shape too) and canvas location where an output of the selected tool is to appear.

In some embodiments, the IAP 700 includes application service logic 716 to enable multiple application services to be utilized during a given user session, where each application service provides the user with a particular functionality and/or user experience. As described by some embodiments, each application service is implemented by the IAP 700 utilizing a corresponding application service logic 716 to configure the interface component 718, rendering engine 720 and/or other components of the IAP 700 to provide the functionality and user experience of the corresponding application service. In this way, the IAP 700 enables the user to operate multiple application services during one online session. Further, the different application services can share resources, including programmatic resources of the IAP 700, such as canvas 722. In this way, each application service can contribute content to and/or utilize features and content provided with the canvas 722 during a given session. Still further, the application services can be implemented as alternative modalities of IAP 700, such that the user can toggle between modes, where each mode provides a particular functionality and user experience. In some embodiments, each application service can utilize a common workspace file associated with the user. By default, a computing device that opens the workspace file can utilize a default application service to access and/or update that workspace file. The user may also switch the mode of operation of the IAP 700 to utilize a different application service to access, use and/or update the workspace file.

The network computing system 750 can include a site manager 758 to manage a website where a set of web-resources 755 (e.g., web page) are made available for the web-based application 80 of user computing devices 10. The web-resources 755 can include instructions, such as scripts or other logic ("ICAP instructions 757"), which are executable by browsers or web components of user computing devices. The web resources 755 can also include (i) resources that are to be shared as between application services, provided to the user computing devices in connection with the user computing devices utilizing either of the application services, and (ii) application specific resources, which execute on the user computing devices for a particular one of the available application services. The web resources 755 can also include a design library of design elements that is partially or fully shared as between the application services. The library of design elements can enable the user to select predetermined design elements for use on the canvas 722 in connection with the user utilizing either of the application services.

In some variations, once the computing device 10 accesses and downloads the web-resources 755, web-based application 80 executes the IAP instructions 757 to implement functionality as described above. For example, the IAP instructions 757 can be executed by web-based application 80 to initiate the program interface 502 on the user computing device 10. The initiation of the program interface 502 may coincide with the establishment of, for example, a web-socket connection between the program interface 502 and a service component 760 of the network computing system 750.

In some embodiments, the web-resources 755 includes logic which web-based application 80 executes to initiate one or more processes of a program interface 502, causing the IAP 700 to retrieve additional programmatic resources and data sets for implementing functionality as described by examples. The web resources 755 can, for example, embed logic (e.g., JAVASCRIPT code), including GPU accelerated logic, in an HTML page for download by computing devices of users. The program interface 502 can be triggered to retrieve additional programmatic resources and data sets from, for example, the network service 752, and/or from local resources of the computing device 10, in order to implement each of the multiple application services of the IAP 700. For example, some of the components of the IAP 700 can be implemented through webpages that can be downloaded onto the computing device 10 after authentication is performed, and/or once the user performs additional actions (e.g., download one or more pages of the workspace associated with the account identifier). Accordingly, in examples as described, the network computing system 750 can communicate the IAP instructions 757 to the computing device 10 through a combination of network communications, including through downloading activity of web-based application 80, where the IAP instructions 757 are received and executed by web-based application 80.

The computing device 10 can use web-based application 80 to access a website of the network service 752 to download the webpage or web resource. Upon accessing the website, web-based application 80 can automatically (e.g., through saved credentials) or through manual input, communicate an account identifier to the service component 760. In some embodiments, web-based application 80 can also communicate one or more additional identifiers that correlate to a user identifier.

Additionally, in some embodiments, the service component 760 can use the user or account identifier of the user identifier to retrieve profile information 509 from a user profile store 766. As an addition or variation, profile information 509 for the user can be determined and stored locally on the user's computing device 10.

The service component 760 can also retrieve the files of an active workspace ("active workspace files 763") that are linked to the user account or identifier from a file store 765. The profile store 766 can also identify the workspace that is identified with the account and/or user, and the file store 765 can store the data sets that comprise the workspace. The data sets stored with the file store 765 can include, for example, the pages of a workspace and one or more data structure representations 761 for the design under edit which is renderable from the respective active workspace files.

As an addition or variation, each file can be associated with metadata that identifies the application service that was used to create the particular file. In some embodiments, the metadata identifies the default application service for viewing, utilizing or otherwise updating the application service.

Additionally, in some embodiments, the service component 760 provides a representation 759 of the workspace associated with the user to the web-based application 80, where the representation identifies, for example, individual files associated with the user and/or user account. The workspace representation 759 can also identify a set of files, where each file includes one or multiple pages, and each page including objects that are part of a design interface.

On the user device 10, the user can view the workspace representation through web-based application 80, and the user can elect to open a file of the workspace through web-based application 80. In some embodiments, upon the user electing to open one of the active workspace files 763, web-based application 80 initiates the canvas 722. For example, the IAP 50 can initiate an HTML 5.0 canvas as a component of web-based application 80, and the rendering engine 120 can access one or more data structures representations 711 of content rendered on the canvas 722.

The IAP 700 utilizes application service logic 716 to implement multiple modes of operation, where each mode corresponds to an application service. As described, the application service logic 716 associated with each service application can include instructions and data for configuring the components of IAP 700 to include functionality and features of the corresponding application service. Accordingly, the application service logic 716 can, for example, configure the application framework and/or input interface 718 to differ in form, functionality and/or configuration as between the alternative modes of the IAP 700. Additionally, the type of actions and interactions which the user can perform to register input can vary based on the modes of operation. Still further, the different modes of operation can include different input or user-interface features for the user to select and use for inclusion on the canvas 722. By way of example, when the IAP 700 is operating in a mode for whiteboarding service application, the program interface 502 can provide input features to enable a user to select a design element that is in the form of a "sticky note," while in an alternative mode for an interactive graphic design service application, the "sticky note feature" is not available. However, in the alternative mode, the user may be able to select anyone of numerous possible shapes or previously designed objects which the user can write textual messages in for display on the canvas 722.

Additionally, the application service logic 716 can configure the operation of the rendering engine 720, such that the functionality and behavior of the rendering engine 720 differs as between different application services. In this way, the rendering engine 720 functions to provide alternative behaviors for different modes of operation, coinciding with the particular service application that is active. By way of example, the configuration of the rendering engine 720 can affect the appearance of the canvas 722, the appearance (e.g., visual attributes) of rendered content elements on the canvas 722, the behavior or representation of user interaction (e.g., whether the user cursor or pointe device is represented on the canvas 722), the type or specific content that is rendered, the physic engine that is used by the rendering engine to represent dynamic events (e.g., the object being moved), what user operations can be performed (e.g., whether select objects can be resized), and the like.

Additionally, each of the application services can utilize a shared library of content elements (e.g., graphic design element), as well as core functionality that enables design elements to be shared and updated between the different application services that are available through the platform. Additionally, the workspace file created and edited through use of one application service can be utilized with the other application service. Moreover, the transition between application services can be seamless-for example, the user computing device 10 can open a workspace file using the first application service (e.g., interactive graphic design application service for UIX design) then seamlessly switch to using the second application service (e.g., whiteboarding application service) with the same file, without closing the workspace file. In some embodiments, each application service enables the user to update the workspace file even while the workspace file is in use by other computing devices (e.g., such as in a collaborative environment). In some embodiments, the user can mode switch the IAP 700 to switch which application service is in use, with each application service utilizing the workspace file.

### Example Clauses

Various aspects of the present disclosure are described in the following numbered clauses.
1. In some embodiments, a processor-implemented method, comprising: generating, on a canvas in a design environment, a layer including a code-defined visual asset based on an external code asset; receiving an input associated with a modification to apply to the code-defined visual asset in the layer; modifying, based on the received input, the code-defined visual asset in the layer; and rendering, on the canvas, the modified code-defined visual asset.
2. The method of clause 1, wherein the code-defined visual asset in the layer is modified without modifying the external code asset.
3. The method of any of clauses 1 or 2, wherein the code-defined visual asset in the layer is modified without modifying instances of the code-defined visual asset in other layers on the canvas in the design environment.
4. The method of any of clauses 1 through 3, wherein generating the layer including the code-defined visual asset comprises: copying source code in the external code asset to source code associated with the layer in the canvas; and modifying the source code associated with the layer in the canvas based on an identity of a default export name in the source code and a name of the code-defined visual asset in the layer.
5. The method of clause 4, wherein modifying the source code associated with the layer in the canvas comprises: determining that the source code in the external code asset does not include a defined default export name; and modifying the source code associated with the layer in the canvas such that a function associated with the name of the code-defined visual asset is defined as a default export in the layer in the canvas.
6. The method of any of clauses 4 or 5, wherein modifying the source code associated with the layer in the canvas comprises: determining that the source code in the external code asset includes a default export name different from exported code in associated with the layer; and modifying the source code associated with the layer in the canvas such that a defined default export name in the modified source code is associated with the exported code instead of the default export name in the external code asset.
7. The method of any of clauses 1 through 6, wherein generating the layer including the code-defined visual asset comprises inserting, into the layer in the canvas, a static image of the visual asset.
8. The method of any of clauses 1 through 7, further comprising exporting the modified code-defined visual asset into a new external code asset.
9. The method of any of clauses 1 through 8, wherein: the received input associated with the modification to apply to the code-defined visual asset in the layer comprises a change made in one or more control panels in the design environment to one or more properties associated with one or more visual components in the code-defined visual asset; and modifying the code-defined visual asset in the layer comprises editing code defining the code-defined visual asset in the layer based on the received input.
10. The method of any of clauses 1 through 9, wherein the received input associated with the modification to apply to the code-defined visual asset in the layer comprises a change to code associated with the code-defined visual asset.
11. The method of any of clauses 1 through 10, further comprising: detecting a change performed in the external code asset from which the layer was generated; and modifying the code-defined visual asset on the canvas based on the detected change.
12. In some embodiments, a processor-implemented method, comprising: importing a code-defined visual asset into a canvas in a design environment for editing; receiving a request to modify the imported code-defined visual asset; modifying a code file associated with the code-defined visual asset based on the received request; and updating the canvas to reflect the modified code file based on how the code-defined visual asset is imported into the canvas.
13. The method of clause 12, wherein importing the code-defined visual asset into the canvas comprises importing the code-defined visual asset into a new layer on the canvas in the design environment.
14. The method of clause 13, wherein the new layer on the canvas in the design environment comprises a duplicate of another layer on the canvas in the design environment.
15. The method of any of clauses 12 or 13, wherein importing the code-defined visual asset into a new layer on the canvas comprises: creating the code file as a file associated with the new layer; and adding code associated with the code-defined visual asset to the created code file.
16. The method of any of clauses 12 through 15, wherein the modification to the code file is isolated from code files associated with other layers on the canvas in the design environment.
17. The method of any of clauses 12 through 16, wherein the modification to the code file is isolated from an external code file associated with the imported code-defined visual asset.
18. The method of any of clauses 12 through 17, wherein importing the code-defined visual asset into the canvas comprises importing the code-defined visual asset as an instance on the canvas in the design environment, the instance referencing an external code file associated with the code-defined visual asset.
19. The method of clause 18, wherein modifying the code file associated with the code-defined visual asset comprises modifying the external code file.
20. The method of any of clauses 18 or 19, wherein updating the canvas to reflect the modification to the code file associated with the code-defined visual asset comprises re-rendering each instance of the code-defined visual asset referencing the external code file on the canvas in the design environment.
21. The method of any of clauses 18 through 20, further comprising receiving a request to separate the instance from other instances referencing the external code file; and responsive to the request: generating a new external code file from the external code file associated with the code-defined visual asset, and associating the instance with the new external code file.
22. The method of claim 21, further comprising: receiving a request to modify the instance of the code-defined visual asset; modifying the new code file based on the received request while leaving the code file associated with the code-defined visual asset unmodified; and updating the instance on the canvas to reflect the modified new code file.
23. A processing system, comprising: at least one memory having executable instructions thereon; and one or more processors configured to execute the executable instructions to cause the processing system to perform the method of any of clauses 1 through 22.
24. A processing system, comprising: means for performing the method of any of clauses 1 through 22.
25. A non-transitory computer-readable medium having executable instructions stored thereon which, when processed by one or more processors, causes the one or more processors to perform the method of any of clauses 1 through 22.

Any and all combinations of any of the claim elements recited in any of the claims and/or any elements described in this application, in any fashion, fall within the contemplated scope of the present invention and protection.

The descriptions of the various embodiments have been presented for purposes of illustration but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module," a "system," or a "computer." In addition, any hardware and/or software technique, process, function, component, engine, module, or system described in the present disclosure may be implemented as a circuit or set of circuits. Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general-purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. A processor-implemented method, comprising:
importing a code-defined visual asset into a canvas in a design environment for editing;
receiving a request to modify the imported code-defined visual asset;
modifying a code file associated with the code-defined visual asset based on the received request; and
updating the canvas to reflect the modified code file based on how the code-defined visual asset is imported into the canvas.

2. The method of claim 1, wherein importing the code-defined visual asset into the canvas comprises importing the code-defined visual asset into a new layer on the canvas in the design environment.

3. The method of claim 2, wherein the new layer on the canvas in the design environment comprises a duplicate of another layer on the canvas in the design environment.

4. The method of claim 2 or 3, wherein importing the code-defined visual asset into a new layer on the canvas comprises:
creating the code file as a file associated with the new layer; and
adding code associated with the code-defined visual asset to the created code file.

5. The method of any of claims 2 to 4, wherein the modification to the code file is isolated from code files associated with other layers on the canvas in the design environment.

6. The method of any of claims 2 to 5, wherein the modification to the code file is isolated from an external code file associated with the imported code-defined visual asset.

7. The method of any preceding claim, wherein importing the code-defined visual asset into the canvas comprises importing the code-defined visual asset as an instance on the canvas in the design environment, the instance referencing an external code file associated with the code-defined visual asset.

8. The method of claim 7, wherein modifying the code file associated with the code-defined visual asset comprises modifying the external code file.

9. The method of claim 7 or 8, wherein updating the canvas to reflect the modification to the code file associated with the code-defined visual asset comprises re-rendering each instance of the code-defined visual asset referencing the external code file on the canvas in the design environment.

10. The method of any of claims 7 to 9, further comprising:
receiving a request to separate the instance from other instances referencing the external code file; and
responsive to the request:
generating a new external code file from the external code file associated with the code-defined visual asset, and
associating the instance with the new external code file.

11. The method of claim 10, further comprising:
receiving a request to modify the instance of the code-defined visual asset;
modifying the new code file based on the received request while leaving the code file associated with the code-defined visual asset unmodified; and
updating the instance on the canvas to reflect the modified new code file.

12. A processing system, comprising:
at least one memory having executable instructions stored thereon; and
one or more processors configured to execute the executable instructions to cause the processing system to:
import a code-defined visual asset into a canvas in a design environment for editing;
receive a request to modify the imported code-defined visual asset;
modify a code file associated with the code-defined visual asset based on the received request; and
update the canvas to reflect the modified code file based on how the code-defined visual asset is imported into the canvas.

13. The processing system of claim 12, wherein to import the code-defined visual asset into the canvas, the one or more processors are configured to cause the processing system to import the code-defined visual asset into a new layer on the canvas in the design environment.

14. The processing system of claim 13, wherein to import the code-defined visual asset into a new layer on the canvas, the one or more processors are configured to cause the processing system to:
create the code file as a file associated with the new layer; and
add code associated with the code-defined visual asset to the created code file.

15. The processing system of claim 13 or 14, wherein the modification to the code file is isolated from code files associated with other layers on the canvas in the design environment.
